# FASCICULE DE BREVET EUROPEEN

(11) **EP 3 147 821 B1**
(45) Date de publication et mention de la délivrance du brevet: **26.12.2018**
(21) Numéro de dépôt: 16187996.0
(22) Date de dépôt: 09.09.2016
(51) Int. Cl.: G06K 9/00, G06K 9/20

(54) **SYSTÈME ET PROCÉDÉ D'ÉCLAIRAGE**
BELEUCHTUNGSSYSTEM UND -VERFAHREN
LIGHTING SYSTEM AND METHOD

(30) Priorité: 28.09.2015 FR 1559137
(43) Date de publication de la demande: 29.03.2017
(73) Titulaire: VALEO VISION, 93012 Bobigny Cedex (FR)
(72) Inventeur: Vazquez Moliní, Daniel, 28224 Madrid (ES); García Botella, Ángel, 28023 Madrid (ES); Álvarez Fernandez-Balbuena, Antonio, 28016 Madrid (ES); Canabal Boutureira, Hector, 28035 Madrid (ES); Romo Peña, Jesus, 23600 Martos (ES)

(56) Documents cités:
- EP-A1- 1 496 689
- EP-A1- 2 127 944
- DE-A1-102011 017 707
- DE-A1-102011 116 128

## Description

La présente invention a trait au domaine de l'éclairage et elle concerne plus particulièrement un système et un procédé d'éclairage pour véhicule automobile apte à émettre un faisceau lumineux sur une scène de route, notamment une scène de route qui s'étend devant le véhicule.

Il a déjà été proposé des systèmes et procédés d'éclairage permettant d'éclairer la scène de route en découpant le faisceau émis en plusieurs secteurs angulaires, voire en pixels, éclairant chacun une partie de la scène de route. Selon les applications envisagées, de telles solutions ont pour vocation d'éclairer la scène loin en avant du véhicule, à la manière d'un faisceau généré par des phares, tout en évitant d'éblouir les occupants des véhicules croisés ou suivis en n'éclairant pas ou peu la partie de la scène dans laquelle ils se trouvent. Pour cela, on détecte la présence et la localisation des véhicules. Une unité de contrôle en déduit alors les secteurs ou pixels à maintenir allumés et ceux à éteindre ou dont il faut baisser l'intensité d'éclairage. Les sources lumineuses employées, par exemple des matrices de diodes électroluminescentes, sont activées en conséquence. Un tel système est décrit par le document DE 10 20199 017 707.

Il a également été envisagé d'employer des systèmes et procédés d'éclairage pour mieux faire apparaître d'éventuelles dangers ou obstacles tels que des piétons ou cyclistes présents le long des bas-côtés. Un faisceau ou spot lumineux présentant une intensité lumineuse accrue et/ou une couleur adapté peut alors les viser et les suivre au fur et à mesure de l'avance du véhicule équipé.

Cela étant, les solutions connues manquent de précision et les faisceaux générés présentent donc le risque de fournir un éclairage inapproprié.

La présente invention se propose de pallier au moins en partie les inconvénients précités et a pour objet en ce sens un système d'éclairage pour véhicule automobile, comportant une unité de détection d'une cible dans un scène de route du véhicule et une unité de génération d'un éclairage de tout ou partie de la scène de route, ladite unité de détection étant configurée pour permettre une acquisition d'informations permettant une modélisation numérique de la cible selon un premier niveau de résolution permettant de suivre son contour, ladite unité de génération d'un éclairage étant configurée pour générer un éclairage de la cible selon ledit premier niveau de résolution d'après ladite modélisation.

Ainsi, selon l'invention, l'éclairage est adapté d'après le contour de la ou des cibles détectées ce qui évite de générer un éclairage risquant de déborder de la partie de la scène de route, à savoir la ou les cibles, sur laquelle l'attention du conducteur du véhicule mérite d'être attirée.

Selon des caractéristiques complémentaires de l'invention qui pourront être prises ensemble ou séparément :
- l'unité de détection est configurée pour permettre une acquisition d'informations relatives à des motifs situés à la surface de la cible, dites informations de motifs, selon un second niveau de résolution,
- ledit second niveau de résolution est identique audit premier niveau de résolution,
- ladite unité de génération d'un éclairage est configurée pour générer l'éclairage de la cible avec ledit second niveau de résolution, d'après lesdites informations de motif,
- ladite unité de détection est configurée pour que lesdites informations de motifs comprennent des informations sur la couleur du motif,
- ladite unité de génération d'un éclairage est configurée pour émettre des faisceaux lumineux dont la couleur est adaptée à la couleur de la cible et/ou du ou des motifs, selon le ou lesdits niveaux de résolution,
- ladite unité de génération d'un éclairage est configurée pour projeter sur ladite cible un faisceau présentant le contour de ladite cible,
- ladite unité de génération d'un éclairage est configurée pour projeter sur la cible une image de ladite cible,
- ladite unité de génération d'un éclairage comprend un module d'éclairage de feu de croisement et une unité spécifique d'éclairage de la cible,
- ladite unité de génération d'un éclairage comprend un module d'éclairage de la scène de route selon une distribution sous la forme de pixels selon au moins ledit premier niveau de résolution,
- ladite unité de détection comprend une unité de modélisation de la scène de route sous la forme d'un ensemble de pixels, dite scène numérisée,
- ladite unité de détection comprend une unité de filtrage de ladite scène numérisée, configurée pour en isoler la ou lesdites cibles,
- ladite unité de détection est configurée pour identifier lesdites cibles selon des formes caractéristiques,
- ladite unité de détection est configurée pour générer ladite modélisation numérique de la cible sous la forme d'une matrice, dite d'éclairage, dans laquelle chaque cellule de la matrice correspond à un pixel de la scène à éclairer et pour alimenter ladite matrice avec les informations relatives à chacun des pixels,
- ladite unité de détection est configurée pour générer ladite matrice selon une fréquence fixe,
- ladite unité de génération d'un éclairage est configurée pour exploiter ladite matrice pour éclairer la cible.

L'invention concerne également un procédé d'éclairage pour véhicule automobile, comportant :
- une étape d'acquisition d'informations permettant une modélisation numérique d'une cible présente dans une scène de route à éclairer, selon un premier niveau de résolution permettant de suivre son contour,
- une étape de génération d'un éclairage de la cible selon ledit premier niveau de résolution d'après ladite modélisation.

Selon des caractéristiques complémentaires de l'invention qui pourront être prises ensemble ou séparément :
- ladite étape d'acquisition d'informations comprend une étape d'acquisition d'informations relatives à des motifs situés à la surface de la cible, dites informations de motifs, selon un second niveau de résolution, éventuellement identique audit premier niveau de résolution,
- ladite étape génération de l'éclairage comprend une étape de génération de l'éclairage de la cible avec ledit second niveau de résolution, d'après lesdites informations de motif,
- lesdites informations de motifs comprennent des informations sur la couleur du motif,
- ladite étape de génération de l'éclairage de la cible comprend une étape d'émission de faisceaux lumineux dont la couleur est adaptée à la couleur de la cible et/ou du ou des motifs selon le ou lesdits niveaux de résolution,
- ladite étape de génération de l'éclairage de la cible comprend une étape de projection sur ladite cible d'un faisceau présentant le contour de ladite cible,
- ladite étape de génération de l'éclairage de la cible comprend une étape de projection sur la cible d'une image de ladite cible,
- ladite étape d'acquisition comprend une étape de modélisation de la scène de route sous la forme d'un ensemble de pixels, dite scène numérisée,
- ladite étape d'acquisition comprend une étape de filtrage de ladite scène numérisée configurée pour en isoler la ou lesdites cibles,
- ladite étape d'acquisition comprend une étape d'identification desdites cibles selon des formes caractéristiques,
- ladite étape d'acquisition comprend une étape de génération de ladite modélisation numérique de la cible sous la forme d'une matrice d'éclairage dans laquelle chaque cellule de la matrice correspond à un pixel de la scène à éclairer et d'alimentation de ladite matrice avec les informations relatives à chacun des pixels,
- ladite étape de génération de la matrice a lieu à une fréquence fixe,
- ladite étape de génération de l'éclairage comprend une étape d'exploitation de ladite matrice pour éclairer la cible.

D'autres caractéristiques et avantages de l'invention apparaîtront à la lecture de la description détaillée d'un mode de réalisation qui va suivre et pour la compréhension de laquelle on se reportera aux figures annexées parmi lesquelles :
- la figure 1 est une représentation schématique de dessus de l'éclairage produit par un exemple de réalisation du système d'éclairage conforme à l'invention ;
- la figure 2 illustre un exemple de modélisation numérique de la cible, selon l'invention ;
- la figure 3a à 3d illustrent différentes étapes d'obtention de la modélisation numériques de cibles, selon l'invention ;
- les figures 4a et 4b illustrent l'éclairage d'une cible avec et sans l'invention.

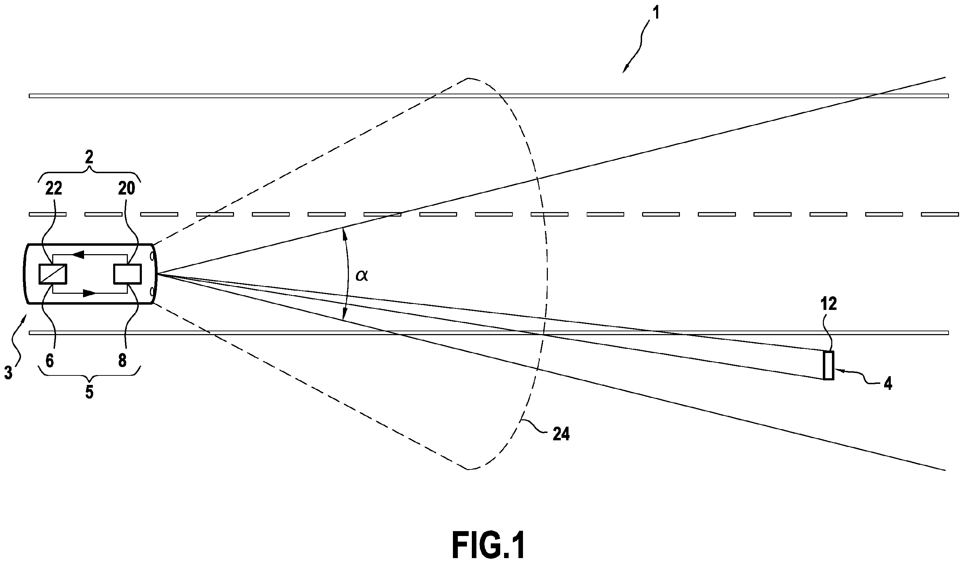

Comme illustré à la figure 1, l'invention concerne un système et un procédé d'éclairage pour véhicule automobile. Il s'agit en particulier d'un système et d'un procédé d'éclairage destinés à éclairer une scène de route 1 située en avant du véhicule 3. Cependant, l'invention pourrait être utilisée pour éclairer dans n'importe quelle autre direction.

Ledit système comporte une unité de détection 2 d'une cible 4 dans la scène de route 1 du véhicule. Le champ d'action de l'unité de détection 2 est ici un secteur angulaire d'amplitude α s'étendant de part et d'autre d'un axe longitudinal du véhicule. Autrement dit, ladite unité de détection 2 est configurée pour balayer ledit secteur angulaire et identifier les cibles qui se trouvent dans ledit secteur angulaire.

Lesdites cibles 4 sont de préférence des objets présents en bord de chaussée et pourront être, par exemple, des signaux routiers, en particulier des signaux routiers verticaux tels que des panneaux indicateurs ou des panneaux de signalisation, comme des panneaux de stop, d'indication de danger, d'interdiction ou d'obligation. Il peut également s'agir de véhicules à l'arrêt, de piétons, d'animaux, de cyclistes.

Ledit système comporte en outre une unité 5 de génération d'un éclairage de tout ou partie de la scène de route. Ladite unité 5 de génération d'un éclairage pourra comprendre une unité d'éclairage 6 et une unité d'activation 8 de l'unité d'éclairage 6. Ladite unité d'activation 8 est configurée pour recevoir des données numérisée de ladite unité de détection 2 et pour contrôler ladite unité d'éclairage 6 à partir desdites données numérisées.

Selon l'invention, et comme cela sera détaillée dans la suite en relation avec les figures suivantes, ladite unité de détection 2 est configurée pour permettre une acquisition d'informations permettant une modélisation numérique de la ou des cibles 4 selon un premier niveau de résolution permettant de suivre son contour. Autrement dit, ladite unité de détection 2 est capable de détourer la ou les cibles 4 en générant un modèle numérique de la ou desdites cibles 4 avec une précision suffisante pour que les données relatives à chacune des cibles dans le modèle permettent d'identifier son contour.

Ladite unité 5 de génération d'un éclairage est en outre configurée pour générer un éclairage 10 de la ou des cibles selon ledit premier niveau de résolution d'après ladite modélisation. Le faisceau produit vise donc précisément la cible, sans déborder ou peu, ce qui permet de produire un éclairage spécifique adapté à la cible pour mieux attirer l'attention du conducteur sur celle-ci sans que cet éclairage spécifique ne risque de produire des effets inappropriés, ce qui aurait pu être le cas s'il était dirigé sur des parties de la scène 1 situées en dehors de la ou des cibles 4.

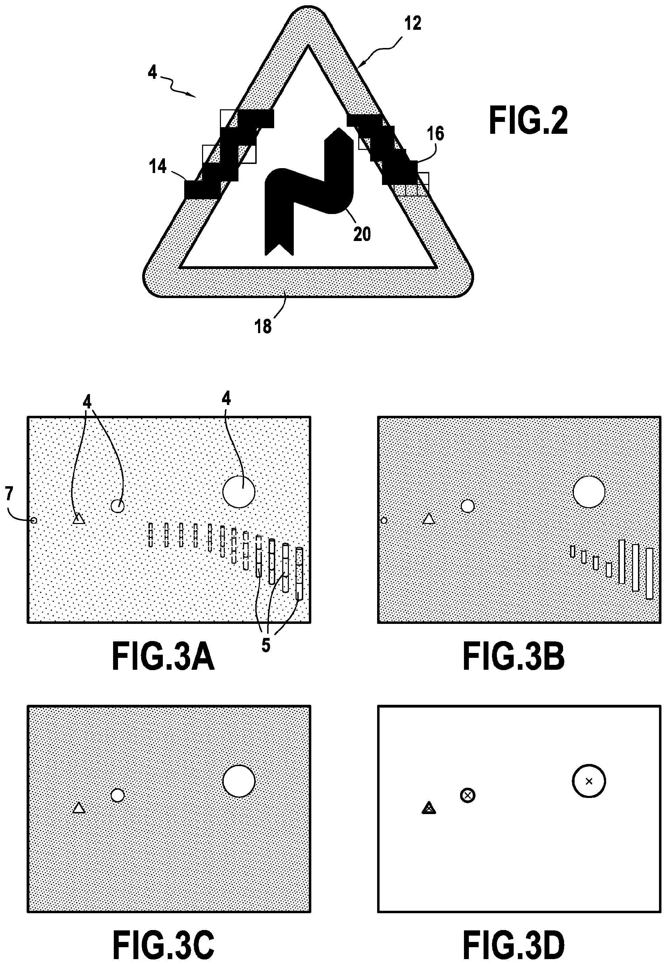

Le fonctionnement de l'unité de détection 2 est détaillé à partir de la figure 2 dans laquelle la cible 4 est un panneau de danger relatif à l'annonce de virages serrés successifs.

Sur cette figure, on constate qu'un contour 12 de la cible 4 est repérée à l'aide de pixels 14, 16. Deux exemples sont donnés selon des niveaux de résolution différents. Les pixels 16, plus petits, présents sur la partie droite permettent d'obtenir une modélisation plus précise que les pixels 14, plus gros situés sur la partie droite. Préférentiellement, le même niveau de résolution et donc la même taille de pixel sera utilisée pour l'ensemble de la modélisation de la ou des cibles, voire de la scène de route.

Avantageusement, ladite unité de détection 2 est configurée pour permettre une acquisition d'informations relatives à des motifs situés à la surface de la ou des cibles 4, dites informations de motifs. Dans l'exemple, outre le contour de la cible 4, ladite unité de détection 2 est ainsi configurée pour modéliser le bandeau 18 qui l'entoure, la forme stylisée des virages 20 et l'espace qui les sépare. Comme déjà évoqué plus haut, cette modélisation est préférentiellement effectuée selon un second niveau de résolution identique au premier mais il pourra aussi s'agir d'un niveau différent, par exemple plus fin.

Ladite unité d'activation 8 et ladite unité d'éclairage 6 sont alors avantageusement configurées pour générer l'éclairage de la cible avec le niveau de résolution employé, d'après lesdites informations de motif.

En particulier, ladite unité de détection pourra être configurée pour que lesdites informations de motifs comprennent des informations sur la couleur du motif, par exemple numérisées sous la forme RGB.

Ladite unité de génération d'un éclairage 5 est avantageusement configurée pour émettre des faisceaux lumineux de couleurs différentes. Ladite unité d'activation 8 est alors configurée pour que les faisceaux produit par ladite unité d'éclairage 6 en direction de la ou des cibles 4 présentent une couleur adaptée à leur couleur et/ou à la couleur du ou des motifs, ceci selon le ou les niveaux de résolution employés.

Autrement dit, ladite unité d'activation 8 et ladite unité d'éclairage 6 sont configurées pour projeter sur ladite cible 4 un faisceau présentant le contour de ladite cible.

Selon une première variante, il pourra s'agir d'un faisceau présentant une lumière uniforme, par exemple blanche, permettant d'obtenir un éclairage de forte intensité de la cible 4.

Selon une autre variante, ladite unité d'activation 8 et ladite unité d'éclairage 6 sont configurées pour projeter sur la cible 4 une image de ladite cible 4, c'est-à-dire une image reproduisant l'ensemble des motifs de ladite cible 4, avec leur couleur respective, de manière à ce qu'ils se superposent. Il a en effet été constaté qu'éclairer une cible avec une image de celle-ci permet de renforcer sa visibilité par rapport à un éclairage en lumière blanche.

Si l'on se reporte de nouveau à la figure 1, on constate que ladite unité de détection 2 pourra comprendre, par exemple, une caméra 20, configurée pour observer la scène de route 1, et une unité de traitement numérique 22, configurée pour transformer sous la forme de modèle numérique les données reçues de ladite caméra 20, notamment à l'aide d'applicatifs de traitement d'image, ladite unité de traitement numérique 22 étant configuré pour contrôler ladite unité d'éclairage 6 en exploitant la modélisation effectuée. Ladite unité de traitement 22 et ladite unité d'activation pourront être intégrées au sein d'une même unité de commande numérique.

Comme illustré aux figures 3a à 3d, ladite unité de détection 2 comprend une unité de modélisation de la scène de route 1 sous la forme d'un ensemble de pixels, dite scène numérisée. La scène de route 1 réelle est ici représentée à la figure 3a. Elle comprend trois cibles 4, à savoir deux panneaux ronds et un panneau triangulaire 4. La scène de route numérisée est illustrée à la figure 3b.

Ladite unité de détection 2 pourra en outre comprendre une unité de filtrage de ladite scène numérisée configurée pour en isoler la ou lesdites cibles 4. A la figure 3c, on constate que les poteaux 5 situés sur le bord de la route et une tâche lumineuse 7 en arrière-plan, visibles sur la figure 3a, ont été filtrés de sorte que seules les trois cibles 4 restent dans le modèle.

Ladite unité de détection 2 est avantageusement configurée pour identifier lesdites cibles 4 selon des formes caractéristiques. On peut de la sort retraiter les données provenant de l'outil d'acquisition de la scène de route employé, tel que la caméra, et adapter précisément les pixels correspondant à la ou auxdites cibles 4. Un tel traitement est schématisé à la figure 3d.

Ladite unité de détection 2 est configurée pour générer ladite modélisation numérique de la ou des cibles, par exemple, sous la forme d'une matrice, dite d'éclairage, dans laquelle chaque cellule de la matrice correspond à un pixel de la scène à éclairer. Ladite matrice est avantageusement alimenter avec les informations relatives à chacun des pixels, à savoir, par exemple, une indication binaire de la présence d'une partie de la cible et/ou les informations de couleur de la partie correspondante de la cible.

Ladite unité d'activation 8 est avantageusement configurée pour exploiter ladite matrice pour contrôler ladite unité d'éclairage 6, ceci préférentiellement selon le même niveau de définition donc le même nombre de pixels. Plus précisément, un pixel produit par l'unité d'éclairage 6 pourra correspondre à un pixel fourni par l'unité de détection 2, avec identité de couleur pour les deux pixels. Autrement dit, chaque pixel de la cible est éclairé par un pixel de même couleur.

Ladite unité de détection est avantageusement configurée pour générer ladite matrice selon une fréquence fixe et ladite unité d'activation 8 est configurée pour rafraichir ladite unité d'éclairage 6 selon la même fréquence.

Ladite unité d'éclairage 6 pourra comprendre un module d'éclairage de feu de croisement, générant un faisceau 24 à coupure, un module d'éclairage de phare, générant un faisceau sans coupure, non illustré, et une unité spécifique d'éclairage de la ou des cibles 4.

Ladite unité spécifique d'éclairage comprend, par exemple, une ou des sources lumineuses non cohérentes comme des diodes électroluminescentes DEL, blanches ou RGB ou cohérentes tel qu'une ou des diodes lasers, sources lumineuses associées à des systèmes de formation d'images tels qu'un système à balayage, notamment couplé à des sources lasers, un système à matrice de micro-miroirs (en langue anglaise Digital Micromirror Device, DMD) ou un système modulateur spatial de lumière (en langue anglaise Spatial Light Modulator, SLM), avantageusement avec modulation de phase de la lumière des sources lumineuses, l'ensemble étant associés à des projecteurs et/ou lentilles pour la projection de l'image éclairante formée. Dans une telle application, ladite unité d'activation 8 pourra contrôler uniquement le faisceau émis pour éclairer la cible 4.

En variante, ladite unité d'éclairage 6 pourra comprendre un module d'éclairage de la scène de route 1 selon une distribution sous la forme de pixels selon au moins ledit premier niveau de résolution. Ladite unité d'activation 8 est alors configurée pour gérer ledit module d'éclairage. Dans une telle application, ladite unité de détection 2 est avantageusement configurée pour détecter les parties de la scène de route 1 à éclairer ou non, par exemple en fonction de la présence de véhicules croisés ou suivis. Ladite unité d'activation 8 contrôle à la fois la forme générale du faisceau d'éclairage de la scène de route 1 et, au sein de celui-ci, la partie spécifique émise pour éclairer la cible 4.

Selon un mode de réalisation avantageux, ladite unité de détection pourra être configurer pour effectuer une corrélation entre la valeur d'intensité d'éclairage et/ou de couleur à fournir et une valeur de l'éclairage ambiant, obtenue à partir des valeurs acquises pour tout ou partie des pixel de l'ensemble de la scène de route 1.

L'invention concerne également un procédé d'éclairage pour véhicule automobile. Comme on l'aura compris, ledit procédé comporte :
- une étape d'acquisition d'informations permettant une modélisation numérique d'une cible 4 présente dans une scène de route 1 à éclairer, selon un premier niveau de résolution permettant de suivre son contour 12,
- une étape de génération d'un éclairage de la cible 4 selon ledit premier niveau de résolution d'après ladite modélisation.

Ladite étape d'acquisition d'informations relative à la cible 4 comprend une étape d'acquisition d'informations relatives à des motifs 18, 20 situés à la surface de la cible 4, dites informations de motifs, selon un second niveau de résolution, éventuellement identique audit premier niveau de résolution.

Ladite étape génération de l'éclairage comprend, par exemple, une étape de génération de l'éclairage de la cible 4 avec le niveau de résolution employé, d'après lesdites informations de motif.

Lesdites informations de motifs comprennent avantageusement des informations sur la couleur du motif.

Ladite étape de génération de l'éclairage de la cible pourra alors comprendre une étape d'émission de faisceaux lumineux dont la couleur est adaptée à la couleur de la cible 4 et/ou du ou des motifs 18, 20 selon let niveau de résolution employé.

Ladite étape de génération de l'éclairage de la cible 4 comprend une étape de projection sur ladite cible 4 d'un faisceau présentant le contour de ladite cible 4, voire une image de ladite cible 4.

Ladite étape d'acquisition comprend, par exemple :
- une étape de modélisation de la scène de route sous la forme d'un ensemble de pixels, dite scène numérisée,
- une étape de filtrage de ladite scène numérisée configurée pour en isoler la ou lesdites cibles,
- une étape d'identification desdites cibles selon des formes caractéristiques, et/ou
- une étape de génération de ladite modélisation numérique de la cible sous la forme d'une matrice d'éclairage dans laquelle chaque cellule de la matrice correspond à un pixel de la scène à éclairer et d'alimentation de ladite matrice avec les informations relatives à chacun des pixels.

Ladite étape de génération de l'éclairage comprend avantageusement une étape d'exploitation de ladite matrice, de préférence en faisant correspondre de façon spatiale des pixels d'éclairage émis lors de l'étape d'éclairage et les pixels produits lors de l'étape d'acquisition, ceci à une même fréquence de traitement.

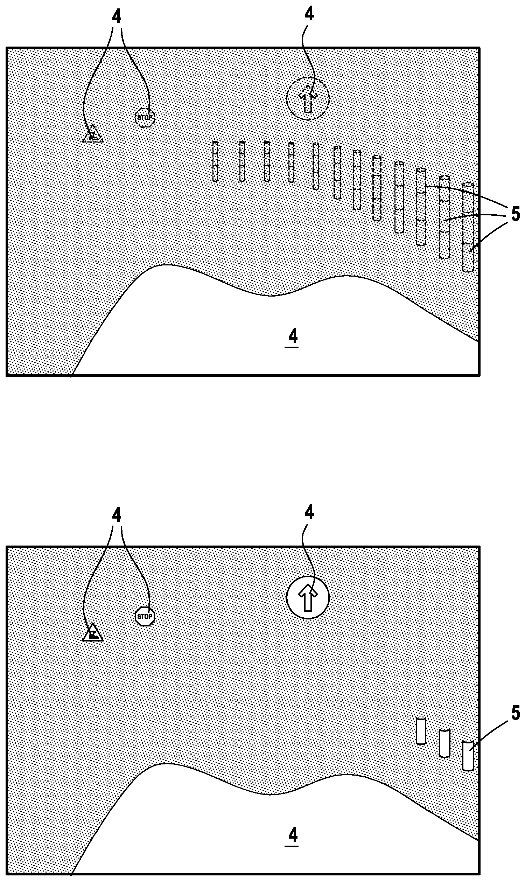

On observe aux figures 4a et 4b la différence d'éclairage avec et sans l'invention. A la figure 4a, les panneaux 4 présents sont peu visibles. A la figure 4b, grâce à l'éclairage ciblé dont ils bénéficient, conformément à l'invention, on les distingue nettement alors que l'éclairage selon un faisceau à coupure 24 du type feu de croisement du reste de la route n'a pas changé.

L'invention concernera avantageusement des cibles fixes, de formes identifiables. Elle pourra également concerner d'autres types de cibles en fonction de la puissance des moyens de traitement numériques employés.

## Revendications

1. Système d'éclairage pour véhicule automobile, comportant une unité (2) de détection d'une cible (4) dans un scène de route (1) du véhicule et une unité (5) de génération d'un éclairage de tout ou partie de la scène de route, ladite unité (2) de détection étant configurée pour permettre une acquisition d'informations permettant une modélisation numérique de la cible (4) selon un premier niveau de résolution permettant de suivre son contour (12), ladite unité (5) de génération d'un éclairage étant configurée pour générer un éclairage de la cible (4) selon ledit premier niveau de résolution d'après ladite modélisation **caractérisé en ce que** l'unité de détection (2) est configurée pour permettre une acquisition d'informations relatives à des motifs (18, 20) situés à la surface de la cible (4), dites informations de motifs, selon un second niveau de résolution, et l'unité de détection (2) est configurée pour que lesdites informations de motifs comprennent des informations sur la couleur du motif (18,20), ladite unité de génération d'un éclairage (5) est configurée pour émettre des faisceaux lumineux dont la couleur est adaptée à la couleur de la cible (4) et/ou du ou des motifs (18, 20), selon le ou lesdits niveaux de résolution.

2. Système selon la revendication précédente dans lequel ladite unité de génération d'un éclairage (5) est configurée pour générer l'éclairage de la cible (4) avec ledit second niveau de résolution, d'après lesdites informations de motif.

3. Système selon l'une quelconque des revendications précédentes dans lequel ladite unité de génération d'un éclairage (5) est configurée pour projeter sur ladite cible (4) un faisceau présentant le contour de ladite cible (4).

4. Système selon l'une quelconque des revendications précédentes dans lequel ladite unité de génération d'un éclairage (5) est configurée pour projeter sur la cible (4) une image de ladite cible (4).

5. Système selon l'une quelconque des revendications précédentes dans lequel ladite unité de génération d'un éclairage (5) comprend un module d'éclairage de feu de croisement et une unité spécifique d'éclairage de la cible et/ou un module d'éclairage de la scène de route selon un distribution sous la forme de pixels selon au moins ledit premier niveau de résolution.

6. Procédé d'éclairage pour véhicule automobile, comportant :
- une étape d'acquisition d'informations permettant une modélisation numérique d'une cible (4) présente dans une scène de route (1) à éclairer, selon un premier niveau de résolution permettant de suivre son contour (12), ladite étape d'acquisition d'informations comprenant une étape d'acquisition d'informations relatives à des motifs (18, 20) situés à la surface de la cible (4), dites informations de motifs, selon un second niveau de résolution, lesdites informations de motifs comprennent des informations sur la couleur du motif (18, 20) ;
- une étape de génération d'un éclairage de la cible (4) selon ledit premier niveau de résolution d'après ladite modélisation, ladite étape génération de l'éclairage comprend une étape de génération de l'éclairage de la cible (4) avec ledit second niveau de résolution, d'après lesdites informations de motif et ladite étape de génération de l'éclairage de la cible (4) comprend une étape d'émission de faisceaux lumineux dont la couleur est adaptée à la couleur de la cible (4) et/ou du ou des motifs (18, 20) selon le ou lesdits niveaux de résolution..

7. Procédé selon la revendications 6 dans lequel ladite étape de génération de l'éclairage de la cible (4) comprend une étape de projection sur ladite cible d'un faisceau présentant le contour de ladite cible.

8. Procédé selon l'une quelconque des revendications 6 ou7 dans lequel ladite étape de génération de l'éclairage de la cible (4) comprend une étape de projection sur la cible d'une image de ladite cible.

## Patentansprüche

1. Beleuchtungssystem für ein Kraftfahrzeug, umfassend eine Einheit (2) zur Erkennung eines Ziels (4) in einer Straßenszene (1) des Fahrzeugs und eine Einheit (5) zur Erzeugung einer Beleuchtung der gesamten Straßenszene oder eines Teils davon, wobei die Einheit (2) zur Erkennung konfiguriert ist, eine Erfassung von Informationen zu erlauben, die eine digitale Modellierung des Ziels (4) entsprechend einem ersten Auflösungsniveau erlauben, das es erlaubt, seiner Kontur (12) zu folgen, wobei die Einheit (5) zur Erzeugung einer Beleuchtung konfiguriert ist, eine Beleuchtung des Ziels (4) entsprechend dem ersten Auflösungsniveau gemäß der Modellierung zu erzeugen,**dadurch gekennzeichnet, dass** die Einheit zur Erkennung (2) konfiguriert ist, eine Erfassung von Informationen, entsprechend einem zweiten Auflösungsniveau, bezogen auf Motive (18, 20), die sich auf der Oberfläche des Ziels (4) befinden, die Motivinformationen genannt werden, zu erlauben,
und die Einheit zur Erkennung (2) konfiguriert ist, damit die Motivinformationen Informationen zur Farbe des Motivs (18, 20) umfassen, die Einheit zur Erzeugung einer Beleuchtung (5) konfiguriert ist, Lichtstrahlen zu emittieren, deren Farbe an die Farbe des Ziels (4) und/oder der Motive (18, 20) angepasst ist, entsprechend dem oder den Auflösungsniveaus.

2. System nach dem vorhergehenden Anspruch, wobei die Einheit zur Erzeugung einer Beleuchtung (5) konfiguriert ist, die Beleuchtung des Ziels (4) gemäß den Motivinformationen mit dem zweiten Auflösungsniveau zu erzeugen.

3. System nach einem der vorhergehenden Ansprüche, wobei die Einheit zur Erzeugung einer Beleuchtung (5) konfiguriert ist, einen Strahl auf das Ziel (4) zu projizieren, der die Kontur des Ziels (4) aufweist.

4. System nach einem der vorhergehenden Ansprüche, wobei die Einheit zur Erzeugung einer Beleuchtung (5) konfiguriert ist, ein Bild des Ziels (4) auf das Ziel (4) zu projizieren.

5. System nach einem der vorhergehenden Ansprüche, wobei die Einheit zur Erzeugung einer Beleuchtung (5) ein Abblendlicht-Beleuchtungsmodul und eine spezifische Einheit zur Beleuchtung des Ziels und/oder ein Modul zur Beleuchtung der Straßenszene entsprechend einer Verteilung in Form von Pixeln entsprechend zumindest dem ersten Auflösungsniveau umfasst.

6. Beleuchtungsverfahren für ein Kraftfahrzeug, umfassend:
- einen Schritt des Erfassens von Informationen, die eine digitale Modellierung eines Ziels (4) erlauben, das in einer zu beleuchtenden Straßenszene (1) vorhanden ist, entsprechend einem ersten Auflösungsniveau, das es erlaubt, seiner Kontur (12) zu folgen, der Schritt des Erfassens von Informationen umfassend einen Schritt des Erfassens von Informationen bezogen auf Motive (18, 20), die sich auf der Oberfläche des Ziels (4) befinden, die Motivinformationen genannt werden, entsprechend einem zweiten Auflösungsniveau,
wobei die Motivinformationen Informationen über die Farbe des Motivs (18, 20) umfassen;
- einen Schritt des Erzeugens einer Beleuchtung des Ziels (4) entsprechend dem ersten Auflösungsniveau gemäß der Modellierung, wobei der Schritt des Erzeugens der Beleuchtung einen Schritt des Erzeugens der Beleuchtung des Ziels (4) mit dem zweiten Auflösungsniveau gemäß den Motivinformationen umfasst, und der Schritt des Erzeugens der Beleuchtung des Ziels (4) einen Schritt des Emittierens von Lichtstrahlen, deren Farbe an die Farbe des Ziels (4) und/oder des oder der Motive (18, 20) angepasst ist, entsprechend dem oder den Auflösungsniveaus umfasst.

7. Verfahren nach Anspruch 6, wobei der Schritt des Erzeugens der Beleuchtung des Ziels (4) einen Schritt des Projizierens eines Strahls auf das Ziel umfasst, der die Kontur des Ziels aufweist.

8. Verfahren nach einem der Ansprüche 6 oder 7, wobei der Schritt des Erzeugens der Beleuchtung des Ziels (4) einen Schritt des Projizierens eines Bilds des Ziels auf das Ziel umfasst.

## Claims

1. Motor-vehicle lighting system including a unit (2) for detecting a target (4) in a road scene (1) of the vehicle and a unit (5) for generating an illumination of all or some of the road scene, said detecting unit (2) being configured to allow information to be acquired allowing a digital model of the target (4) to be generated with a first resolution level allowing its outline (12) to be followed, said unit (5) for generating an illumination being configured to generate an illumination of the target (4) with said first resolution level according to said model, **characterized in that** the detecting unit (2) is configured to allow information relating to patterns (18, 20) located on the surface of the target (4), which information is referred to as pattern information, to be acquired with a second resolution level, and the detecting unit (2) is configured so that said pattern information comprises information on the colour of the pattern (18, 20), and said unit (5) for generating an illumination is configured to emit light beams the colour of which is tailored to the colour of the target (4) and/or of the one or more patterns (18, 20), with said resolution level or levels.

2. System according to the preceding claim, wherein said unit (5) for generating an illumination is configured to generate the illumination of the target (4) with said second resolution level, according to said pattern information.

3. System according to any one of the preceding claims, wherein said unit (5) for generating an illumination is configured to project, onto said target (4), a beam having the outline of said target (4).

4. System according to any one of the preceding claims, wherein said unit (5) for generating an illumination is configured to project, onto the target (4), an image of said target (4).

5. System according to any one of the preceding claims, wherein said unit (5) for generating an illumination comprises a low-beam lighting module and a specific unit for lighting the target and/or a module for lighting the road scene with a distribution in pixel form with at least said first resolution level.

6. Motor-vehicle lighting method, including:
- a step of acquiring information allowing a digital model of a target (4) present in a road scene (1) to be lit to be generated with a first resolution level allowing its outline (12) to be followed, said step of acquiring information comprising a step of acquiring information relating to patterns (18, 20) located on the surface of the target (4), which information is referred to as pattern information, with a second resolution level, said pattern information comprising information on the colour of the pattern (18, 20);
- a step of generating an illumination of the target (4) with said first resolution level according to said model, said step of generating the illumination comprising a step of generating the illumination of the target (4) with said second resolution level, according to said pattern information, and said step of generating the illumination of the target (4) comprising a step of emitting light beams the colour of which is tailored to the colour of the target (4) and/or of the one or more patterns (18, 20) with said resolution level or levels.

7. Method according to Claim 6, wherein said step of generating the illumination of the target (4) comprises a step of projecting, onto said target, a beam having the outline of said target.

8. Method according to either one of Claims 6 and 7, wherein said step of generating the illumination of the target (4) comprises a step of projecting, onto the target, an image of said target.
